# EUROPÄISCHE PATENTSCHRIFT

(11) **EP 0 451 662 B1**
(45) Veröffentlichungstag und Bekanntmachung des Hinweises auf die Patenterteilung: **16.06.1993**
(21) Anmeldenummer: 91105135.7
(22) Anmeldetag: 30.03.1991
(51) Int. Cl.: F23L 15/04, F23D 14/66, F23D 14/22

(54) **Rekuperatorbrenner**
Recuperative burner
Brûleur récupérateur

(30) Priorität: 11.04.1990 DE 4011190
(43) Veröffentlichungstag der Anmeldung: 16.10.1991
(73) Patentinhaber: Ruhrgas Aktiengesellschaft, 45117 Essen (DE)
(72) Erfinder: Altemark, Detlef, Dr. Ing., W-4270 Dorsten 1 (DE); Adelt, Marius, Dr. Ing., W-4270 Dorsten 11 (DE)
(74) Vertreter: Zenz, Joachim Klaus, Dipl.-Ing.

(56) Entgegenhaltungen:
- EP-A- 0 296 032
- EP-A- 0 324 043
- DE-A- 1 551 761
- US-A- 4 587 949

## Beschreibung

Die Erfindung betrifft einen Rekuperatorbrenner, insbesondere für Industrieanlagen, mit einer Brennkammer, die an eine Brennstoffzuleitung und eine Luftführung angeschlossen ist, und mit einem ringförmigen Rekuperator aus keramischem Material, der die Luftführung bildet und im Gegenstrom von Abgas durchströmt ist.

Bei einem bekannten Brenner der eingangs genannten Art (EP 0 324 043) besteht der Rekuperator aus einem ringförmigen Keramikblock, der von einer Mehrzahl von in Strömungsrichtung verlaufenden Kanälen durchsetzt ist, wobei diese Kanäle in radialen Reihen angeordnet sind. Sämtliche Kanäle einer Reihe werden entweder von Luft oder von Abgas durchströmt, wobei sich die Reihen von Luftkanälen mit denen von Abgaskanälen abwechseln. Sämtliche Luftkanäle jeder Reihe werden über eine radiale Durchbrechung mit dem Innenraum des Rekuperators verbunden. Diese Durchbrechungen liegen auf einer gemeinsamen Höhe und definieren hier die Brennkammer. Sämtliche Abgaskanäle jeder Reihe werden über eine radiale Durchbrechung mit dem Äußeren des Rekuperators verbunden. Auch diese Durchbrechungen liegen auf einer gemeinsamen Höhe und definieren hier einen Abgasauslaß.

Der bekannte Rekuperator benötigt viel Nacharbeit, insbesondere zur Herstellung der komplizierten radialen Kanaldurchbrechungen. Auch muß bei einem Verschleiß der Brennkammer der gesamte Rekuperatorblock ausgetauscht werden. Dies ist insbesondere dann häufig der Fall, wenn die Brennkammer mit einem düsenförmigen Auslaß in Form eines eingeschlickerten Keramikteils versehen ist. Vor allen Dingen unterliegt die bekannte Konstruktion erheblichen thermischen Spannungen, mit dem Ergebnis, daß in dieser Form nur Brenner mit vergleichsweise geringen Abmaßen ausgerüstet werden können.

Der Erfindung liegt die Aufgabe zugrunde, die bekannte Konstruktion zu vereinfachen und fertigungsgünstiger zu gestalten, und zwar derart, daß sie sich auch für Brenner größerer Abmaße eignet.

Zur Lösung dieser Aufgabe ist der Rekuperatorbrenner nach der Erfindung dadurch gekennzeichnet, daß der Rekuperator eine Innenwand, eine wärmeübertragende Mittelwand und eine Außenwand aufweist, daß der Raum zwischen Innen- und Außenwand in die Luft- und Abgasführung unterteilt ist, daß die wärmeübertragende Mittelwand in Strömungsrichtung verlaufende Falten bildet, daß die Innenwand unter Bildung mindestens einer zur Brennkammer führenden Luftöffnung stromauf der Brennkammer endet und daß die Brennkammer in die wärmeübertragende Mittelwand des Rekuperators eingesteckt und von dessen Falten geführt ist.

Der Rekuperator besteht also aus drei einfachen koaxialen Wänden, von denen die wärmeübertragende Mittelwand als Faltenwand mit entsprechend vergrößerter Wärmeübergangsfläche ausgebildet ist. In diese Faltenwand ist die Brennkammer eingesteckt. Dementsprechend kann allein die Brennkammer ausgetauscht werden, sofern größerer Verschleiß auftritt. Die erfindungsgemäße Konstruktion unterliegt keinen oder nur geringen thermischen Spannungen, so daß sie die Lebensdauer erhöht und sich auch für Brenner großer Abmaße eignet.

Die erfindungsgemäße Faltenwand bietet die Möglichkeit, die Rekuperator-Oberfläche extrem zu vergrößern, beispielsweise dadurch, daß die Falten sehr eng nebeneinander gelegt werden. Optimale Verhältnisse ergeben sich dadurch, daß die wärmeübertragende Mittelwand mit ihren Falten an der Innen- und der Außenwand des Rekuperators anliegt. Dadurch wird der Raum zwischen Innen- und Außenwand rekuperativ voll genutzt.

Zur Aufnahme und Führung der Brennkammer können die Falten der wärmeübertragenden Mittelwand einen Durchmessersprung nach innen oder nach außen aufweisen. Vorteilhafter ist es hingegen, daß die Brennkammer im Durchmesser eine Fortsetzung der Innenwand des Rekuperators bildet.

Die drei Wände des Rekuperators sind ihrer Form nach ganz besonders gut dazu geeignet, im Schlickerverfahren hergestellt zu werden, da sie sich einzeln in einem einzigen Abguß ausbilden lassen. Diese Art der Herstellung wendet man im Hinblick auf die Vermeidung thermischer Spanungen zwischen den einzelnen Bauteilen insbesondere bei großen Brennern an. Alternativ besteht die erfindungsgemäß ebenfalls vorteilhafte Möglichkeit, daß die Innenwand, die wärmeübertragende Mittelwand und die Außenwand des Rekuperators einstückig miteinander ausgebildet sind, und zwar zur Herstellung kleinerer Brenner mit verminderten thermischen Spannungen und entsprechend erhöhter Lebensdauer. Die Einstückigkeit kann sich auch auf nur zwei der Wände beschränken. Besonders geeignet in diesem Zusammenhang ist das Stranggießverfahren, wobei dann allerdings nur zylindrische Querschnitte möglich sind. Im übrigen läßt sich dieses Verfahren auch dann einsetzen, wenn die Wände einzeln hergestellt werden.

In wesentlicher Weiterbildung der Erfindung ist der Rekuperatorbrenner nach der Erfindung dadurch gekennzeichnet, daß die Falten der wärmeübertragenden Mittelwand des Rekuperators konisch auf die Brennkammer zulaufen und mit deren stromab gelegenem Ende Sekundärluftöffnungen definieren, wobei vorzugsweise die Sekundärluftöffnungen von einem gegebenenfalls mit radialen Ausnehmungen versehenen radialen Flansch des düsenförmig verengten stromab gelegenen Endes der Brennkammer begrenzt werden. Die Faltenwand verjüngt sich also düsenförmig um das stromab gelegene Ende der Brennkammer herum und läßt lediglich die Sekundärluftöffnungen frei, die sich zwanglos am Ende der Falten ausbilden. Ggf. können die Sekundärluftöffnungen durch Ringspaltabschnitte miteinander in Verbindung stehen. Die düsenartige Einschnürung der Faltenwand führt dazu, daß sich für die Abgasströmung sozusagen ein trichterförmiger Einlauf bildet. Dies gilt auch dann, wenn, wie es nach der Erfindung vorgesehen ist, die Außenwand des Rekuperators mit Abstand vor den Sekundärluftöffnungen endet, um eine Kurzschlußströmung der Sekundärluft und des Brennerabgases zu verhindern.

Alternativ besteht die besonders vorteilhafte Möglichkeit, daß der Rekuperatorbrenner Bestandteil eines Strahlheizrohres ist, dessen Außenrohr sich an die Außenwand des Rekuperators anschließt, wähend das Innenrohr im Durchmesser eine Fortsetzung der wärmeübertragenden Mittelwand darstellt, und zwar gegebenenfalls unter Bildung mindestens einer Öffnung zur Abgasansaugung.

Nach einem weiteren vorteilhaften Merkmal der Erfindung laufen die Falten der wärmeübertragenden Mittelwand an dem - bezogen auf die Luftführung - stromauf gelegenen Ende des Rekuperators konisch an die Außenwand heran und bilden somit einen axialen Verschluß der Abgasführung, wobei gleichzeitig ein etwa trichterförmiger Einlauf für die Luftströmung entsteht.

Als erfindungswesentlich offenbart gelten auch solche Kombinationen der erfindungsgemäßen Merkmale, die von den obigen Verknüpfungen abweichen.

Die Erfindung wird im folgenden anhand eines bevorzugten Ausführungsbeispiels im Zusammenhang mit der beiliegenden Zeichnung näher erläutert. Die Zeichnung zeigt in:
- Fig. 1: einen Axialschnitt durch einen erfindungsgemäßen Rekuperatorbrenner;
- Fig. 2: einen Schnitt entlang der Linie II-II in Fig. 1;
- Fig. 3: eine Ansicht in Richtung des Pfeils III in Fig. 1;
- Fig. 4: einen Schnitt entlang der Linie IV-IV in Fig. 1.

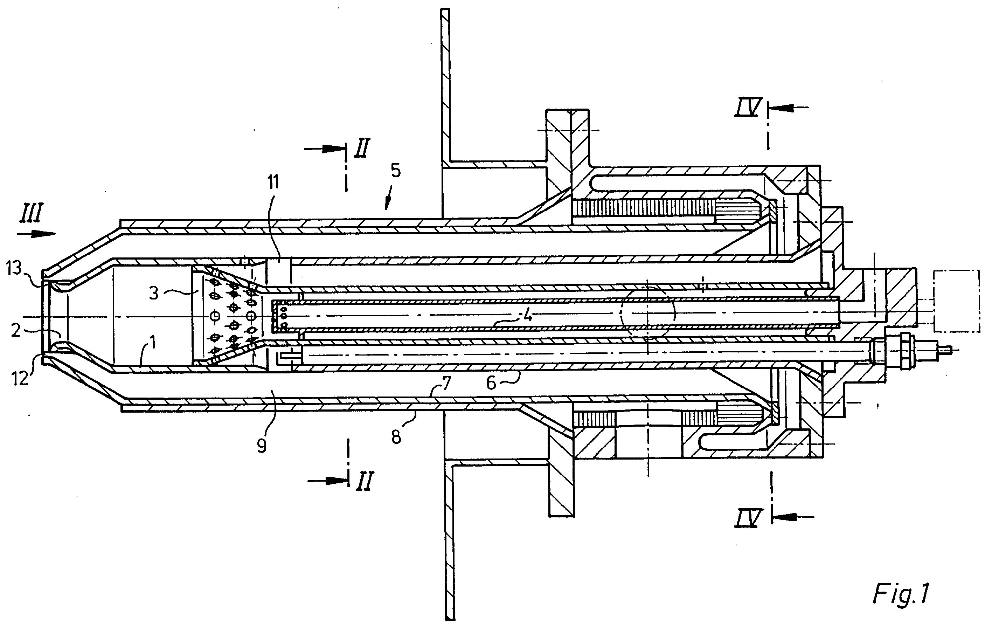

Der Brenner nach Fig. 1 weist eine Brennkammer 1 auf, deren stromab gelegenes Ende 2 düsenförmig eingeschnürt ist. Gegenüberliegend ist in die Brennkammer 1 ein korbförmiger Flammenhalter 3 eingesteckt, in welchem eine Brennstoffzuleitung 4 in Form einer Gaslanze mündet.

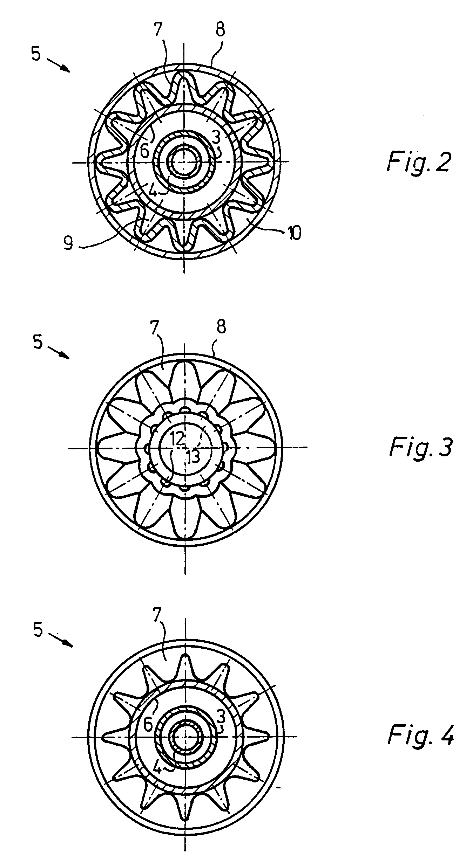

Ferner weist der Rekuperatorbrenner einen ringförmigen Rekuperator 5 aus keramischem Material auf, der von einer Innenwand 6, einer wärmeübertragenden Mittelwand 7 und einer Außenwand 8 gebildet wird. Die Mittelwand 7 unterteilt den Raum zwischen der Innenwand 6 und der Außenwand 8 in eine Luftführung 9 und eine Abgasführung 10, siehe insbesondere Fig. 2. Aus dieser Figur ist auch zu ersehen, daß die wärmeübertragende Mittelwand 7 als Faltenwand ausgebildet ist, wobei die Falten sowohl an der Innenwand 6 als auch an der Außenwand 8 anliegen.

Die Brennkammer 1 bildet eine Fortsetzung der Innenwand 6 und ist in die wärmeübertragende Mittelwand 7 eingesteckt, wobei sie von deren Falten gehalten und geführt wird. Die Innenwand 6 endet mit Abstand vor der Brennkammer 1, und zwar unter Bildung einer umlaufenden Luftöffnung 11.

Der erfindungsgemäße Rekuperatorbrenner stellt eine einfache und fertigungsgünstige Konstruktion dar. Die drei Wände des Rekuperators 5 sind, ebenso wie die Brennkammer 1, in einem Guß geschlickert und ineinander gesteckt. Wärmespannungen zwischen den Bauteilen treten nicht auf, so daß sich die erfindungsgemäße Konstruktion auch für große Brenner eignet.

Wie aus den Figuren 1 und 3 ersichtlich, laufen die Falten der wärmeübertragenden Mittelwand 7 konisch auf die Brennkammer 1 zu und bilden mit deren stromab gelegenem Ende 2 Sekundärluftöffnungen 12. Letztere werden von einem radialen Flansch 13 des düsenförmig verengten, stromab gelegenen Endes 2 der Brennkammer 1 begrenzt. Die Außenwand 8 des Rekuperators 5 endet mit Abstand vor den Sekundärluftöffnungen 12.

Der erfindungsgemäße Rekuperatorbrenner arbeitet also mit zweistufiger Verbrennung, wobei die Primärluft durch die Luftöffnungen 11 in die Brennkammer hineingelangt. Die Luftführung 9 setzt sich fort bis zu den Sekundärluftöffnungen 12, aus denen die Sekundärluft strahlenförmig austritt und im wesentlichen auf den Umfang der Flamme aufgelegt wird. Eine Kurzschlußströmung der Sekundärluft in die Abgasführung 10 des Rekuperators kann nicht auftreten, da dessen Außenwand 8 entsprechend zurückgesetzt ist. Hierzu trägt auch der Impuls der Sekundärluft bei.

Am entgegengesetzten Ende besitzt der Rekuperator 5 eine vergleichbare Konfiguration, siehe insbesondere Fig. 4. Die Falten der wärmeübertragenden Mittelwand 7 laufen konisch bis an die Außenwand 8 heran, wodurch die Abgasführung 10 abgeschlossen wird. Auch bildet sich ein etwa trichterförmiger Einlauf für die Luftströmung und ein komplementärer Abgasauslaß.

Im Rahmen der Erfindung sind ohne weiteres Abwandlungsmöglichkeiten gegeben. So kann der Rekuperator 5 ganz oder teilweise im Standgießverfahren hergestellt werden, wobei die nicht-zylindrischen Teile, beispielsweise die konischen Faltenverläufe an den Rekuperatorenden, anzugarnieren sind. Ferner besteht die Möglichkeit, die Brennkammer gegenüber der Innenwand des Rekuperators im Durchmesser größer oder kleiner auszubilden. Die Falten der wärmeübertragenden Mittelwand sind dann am Orte der Brennkammer entsprechend zu gestalten. Im übrigen müssen die Falten nicht unbedingt an der Innen- und Außenwand des Rekuperators anliegen. Der radiale Flansch am stromab gelegenen Ende der Brennkammer kann an den Stellen der Sekundärluftöffnungen radiale Ausnehmungen aufweisen. Auch läßt sich die Erfindung anwenden auf eine Brennkammer ohne düsenförmige Einschnürung am stromab gelegenen Ende. Die Außenwand des Rekuperators kann durchaus ein Stück weiter vorgezogen sein, als es in der Zeichnung dargestellt ist, und gegebenenfalls das Außenrohr eines Strahlheizrohres bilden.

Der Rekuperatorbrenner nach der Erfindung eignet sich insbesondere zur Verbrennung von gas- oder dampfförmigen Brennstoffen, kann jedoch auch mit flüssigen oder staubförmigen Brennstoffen betrieben werden.

## Patentansprüche

1. Rekuperatorbrenner, insbesondere für Industrieanlagen, mit einer Brennkammer (1), die an eine Brennstoffzuleitung (4) und eine Luftführung (9) angeschlossen ist, und mit einem ringförmigen Rekuperator (5) aus keramischem Material, der die Luftführung bildet und im Gegenstrom von Abgas durchströmt ist,
**dadurch gekennzeichnet,**
daß der Rekuperator (5) eine Innenwand (6), eine wärmeübertragende Mittelwand (7) und eine Außenwand (8) aufweist, daß der Raum zwischen Innen- und Außenwand in die Luft- und Abgasführung (9, 10) unterteilt ist, daß die wärmeübertragende Mittelwand in Strömungsrichtung verlaufende Falten bildet, daß die Innenwand unter Bildung mindestens einer zur Brennkammer (1) führenden Luftöffnung (11) stromauf der Brennkammer (1) endet und daß die Brennkammer in die wärmeübertragende Mittelwand des Rekuperators eingesteckt und von deren Falten geführt ist.

2. Rekuperatorbrenner nach Anspruch 1, dadurch gekennzeichnet, daß die wärmeübertragende Mittelwand (7) mit ihren Falten an der Innen- und der Außenwand (6, 8) des Rekuperators (5) anliegt.

3. Rekuperatorbrenner nach Anspruch 1 oder 2, dadurch gekennzeichnet, daß die Brennkammer (1) im Durchmesser eine Fortsetzung der Innenwand (6) des Rekuperators (5) bildet.

4. Rekuperatorbrenner nach einem der Ansprüche 1 bis 3, dadurch gekennzeichnet, daß die Innenwand (6), die wärmeübertragende Mittelwand (7) und die Außenwand (8) des Rekuperators (5) geschlickert sind.

5. Rekuperatorbrenner nach einem der Ansprüche 1 bis 3, dadurch gekennzeichnet, daß die Innenwand (6), die wärmeübertragende Mittelwand (7) und die Außenwand (8) des Rekuperators (5) einstückig miteinander ausgebildet sind.

6. Rekuperatorbrenner nach einem der Ansprüche 1 bis 5, dadurch gekennzeichnet, daß die Falten der wärmeübertragenden Mittelwand (7) des Rekuperators (5) konisch auf die Brennkammer (1) zulaufen und mit deren stromab gelegenem Ende (2) Sekundärluftöffnungen (12) definieren.

7. Rekuperatorbrenner nach Anspruch 6, dadurch gekennzeichnet, daß die Sekundärluftöffnungen (12) von einem radialen Flansch (13) des düsenförmig verengten, stromab gelegenen Endes (2) der Brennkammer (1) begrenzt werden.

8. Rekuperatorbrenner nach Anspruch 7, dadurch gekennzeichnet, daß der Flansch (13) radiale Ausnehmungen zur Begrenzung der Sekundärluftöffnungen (12) aufweist.

9. Rekuperatorbrenner nach einem der Ansprüche 6 bis 8, dadurch gekennzeichnet, daß die Außenwand (8) des Rekuperators (5) mit Abstand vor den Sekundärluftöffnungen (12) endet.

10. Rekuperatorbrenner nach einem der Ansprüche 1 bis 8, dadurch gekennzeichnet, daß sich an die Außenwand (8) des Rekuperators (5) das Außenrohr eines Strahlheizrohres anschließt, dessen Innenrohr eine Fortsetzung der wärmeübertragenden Mittelwand (7) bildet.

11. Rekuperatorbrenner nach einem der Ansprüche 1 bis 10, dadurch gekennzeichnet, daß die Falten der wärmeübertragenden Mittelwand (7) an dem - bezogen auf die Luftführung - stromauf gelegenen Ende des Rekuperators (5) konisch an die Außenwand (8) heranlaufen.

## Claims

1. Recuperative burner, particularly for industrial plants, comprising a combustion chamber (1) connected to a fuel supply line (4) and an air guiding device (9), and an annular recuperator (5) made of ceramic material representing said air guiding device and allowing waste gas to flow in a countercurrent direction,
**characterised in that**
said recuperator (5) features an inside wall (6), a heat-transferring centre wall (7) and an outside wall (8), in that the space between the inside wall and the outside wall is partitioned into the air guiding device (9) and the waste gas guiding device (10), in that the heat-transferring centre wall displays folds in the direction of flow, in that the inside wall terminates upstream of the combustion chamber (1) forming at least one air aperture (11) leading to the combustion chamber (1) and in that the combustion chamber is inserted into the heat-transferring centre wall of the recuperator and held in place by the folds of said centre wall.

2. Recuperative burner according to Claim 1, characterised in that the folds of the heat-transferring centre wall (7) are in contact with the inside and outside walls (6, 8) of the recuperator (5).

3. Recuperative burner according to Claim 1 or Claim 2, characterised in that the combustion chamber (1) is, in terms of diameter, a continuation of the inside wall (6) of the recuperator (5).

4. Recuperative burner according to any one of Claims 1 to 3, characterised in that the inside wall (6), the heat-transferring centre wall (7) and the outside wall (8) of the recuperator (5) are produced by slip casting.

5. Recuperative burner according to any one of Claims 1 to 3, characterised in that the inside wall (6), the heat-transferring centre wall (7) and the outside wall (8) of the recuperator (5) are joined to form one piece.

6. Recuperative burner according to any one of Claims 1 to 5, characterised in that the folds of the heat-transferring centre wall (7) of the recuperator (5) extend conically towards the combustion chamber (1), defining secondary air apertures (12) at its downstream end (2).

7. Recuperative burner according to Claim 6, characterised in that the secondary air apertures (12) are limited by a radial flange (13) of the jet-shaped downstream end (2) of the combustion chamber (1).

8. Recuperative burner according to Claim 7, characterised in that the flange (13) features radial recesses limiting the secondary air apertures (12).

9. Recuperative burner according to any one of Claims 6 to 8, characterised in that the outside wall (8) of the recuperator (5) ends at a distance upstream of the secondary air apertures (12).

10. Recuperative burner according to any one of Claims 1 to 8, characterised in that the outside tube of a radiant heating tube is the continuation of the outside wall (8) of the recuperator (5), while the inside tube of said radiant heating tube is the continuation of the heat-transferring centre wall (7).

11. Recuperative burner according to any one of Claims 1 to 10, characterised in that the folds of the heat-transferring centre wall (7) extend conically towards the outside wall (8) at the upstream end - with respect to the air flow - of the recuperator (5).

## Revendications

1. Brûleur récupérateur, en particulier pour des installations industrielles, avec une chambre de combustion (1), raccordée à une amenée de combustible (4) et une amenée d'air (9), et un récupérateur annulaire (5) en matériau céramique servant au guidage de l'air et par lequel passent, à contre-courant, des fumées, caractérisé par le fait que le récupérateur (5) est composé d'une paroi intérieure (6), d'une paroi centrale (7) transférant la chaleur, et d'une paroi extérieure, que l'espace entre la paroi intérieure et la paroi extérieure est subdivisé en guidages d'air et de fumées (9, 10), que la paroi centrale transférant la chaleur forme des plis en direction de l'écoulement, que la paroi intérieure finit en amont de la chambre de combustion (1) en formant au moins une ouverture d'air (11) en direction de la chambre de combustion (1), et que la chambre de combustion est encastrée dans la paroi centrale du récupérateur, transférant la chaleur, et maintenue par leurs plis.

2. Brûleur récupérateur selon la revendication 1, caracterisé par le fait que la paroi centrale transférant la chaleur (7) colle, avec ses plis, contre les parois intérieure et extérieure (6, 8) du récupérateur.

3. Brûleur récupérateur selon l'une des revendications 1 ou 2, caracterisé par le fait que la chambre de combustion (1) constitue, avec son diamètre, une prolongation de la paroi intérieure (6) du récupératuer (5).

4. Brûleur récupérateur selon l'une des revendications 1 à 3, caracterisé par le fait que la paroi intérieure (6), la paroi centrale transférant la chaleur (7) et la paroi extérieure (8) du récupérateur (5) sont fabriquées de coulée en barbotine.

5. Brûleur récupérateur selon l'une des revendications 1 à 3, caracterisé par le fait que la paroi intérieure (6), la paroi centrale transférant la chaleur (7) et la paroi extérieure (8) du récupérateur (5) forment une seule pièce.

6. Brûleur récupérateur selon l'une des revendications 1 à 5, caracterisé par le fait que les plis de la paroi centrale transférant la chaleur (7) du récupérateur (5) se terminent en cône par rapport à la chambre de combustion (1) et définissent, avec le bout aval (2) de ladite chambre de combustion, des ouvertures d'air secondaire (12).

7. Brûleur récupérateur selon la revendication 6, caracterisé par le fait que les ouvertures d'air secondaire (12) son délimitées par une bride radiale (13) du bout aval (2), se rétrécissant en forme de buse, de la chambre de combustion (1).

8. Brûleur récupérateur selon la revendication 7, caracterisé par le fait que la bride (13) présente des creux radiaux pour la délimitation des ouvertures d'air secondaire (12).

9. Brûleur récupérateur selon l'une des revendications 6 à 8, caracterisé par le fait que la paroi extérieure (8) du récupérateur (5) finit à une certaine distance en amont des ouvertures d'air secondaire (12).

10. Brûleur récupérateur selon l'une des revendications 1 à 8, caracterisé par le fait que le tuyau extérieur d'un tube radiant est contigu à la paroi extérieure (8) du récupérateur (5) et que le tuyau intérieur dudit tube radiant forme une prolongation de la paroi centrale transférant la chaleur (7).

11. Brûleur récupérateur selon l'une des revendications 1 à 10, caracterisé par le fait que les plis de la paroi centrale transférant la chaleur (7) se dirigent, au bout amont du récupératuer (5) - par rapport au guidage de l'air -, de façon conique vers la paroi extérieure (8).
